# EUROPÄISCHE PATENTSCHRIFT

(11) **EP 2 786 040 B1**
(45) Veröffentlichungstag und Bekanntmachung des Hinweises auf die Patenterteilung: **02.03.2016**
(21) Anmeldenummer: 12797713.0
(22) Anmeldetag: 29.11.2012
(51) Int. Cl.: F16F 15/32

(54) **WELLENANORDNUNG SOWIE VERFAHREN ZUM WEITERLEITEN VON UM EINE DREHACHSE WIRKENDEN DREHMOMENTEN**
SHAFT ARRANGEMENT AND METHOD FOR TRANSFERRING TORQUES ACTING ABOUT A ROTATION AXIS
SYSTÈME D'ARBRE ET PROCÉDÉ DE TRANSMISSION DE COUPLES DE ROTATION AGISSANT AUTOUR D'UN AXE DE ROTATION

(30) Priorität: 02.12.2011 DE 102011120095
(43) Veröffentlichungstag der Anmeldung: 08.10.2014
(73) Patentinhaber: Fraunhofer-Gesellschaft zur Förderung der angewandten Forschung e.V., 80686 München (DE)
(72) Erfinder: FLASCHENTRÄGER, David, 64293 Darmstadt (DE); HANSMANN, Jan, 64287 Darmstadt (DE); MELZ, Tobias, 64285 Darmstadt (DE)
(74) Vertreter: Rösler, Uwe
(86) Internationale Anmeldenummer: PCT/EP2012/004932
(87) Internationale Veröffentlichungsnummer: WO 2013/079203

(56) Entgegenhaltungen:
- US-A- 2 238 380
- US-A- 2 612 773
- US-A- 5 443 247
- US-A1- 2004 016 857

## Beschreibung

### Technisches Gebiet

Die Erfindung bezieht sich auf eine Wellenanordnung zum Weiterleiten von um eine Drehachse wirkenden Drehmomenten mit einer veränderlich einstellbaren, um die Drehachse wirkenden Torsionssteifigkeit.

### Stand der Technik

Rotierende Systeme zur Übertragung von Drehbewegungen und Drehmomenten, beispielsweise in Form mechanischer Wellen, unterliegen betriebsbedingten Torsionsbeanspruchungen, die insbesondere bei einem diskontinuierlichen Drehmomenteneintrag längs der Welle zur Ausbildung störender Rotationsschwingungen führen können. Vor allem lang und schlank ausgebildete Wellen, die system- und konstruktionsbedingt über nur geringe Torsionssteifigkeiten verfügen neigen zur Ausbildung derartiger Rotations- bzw. Torsionsschwingungen, die zudem resonante Eigenschwingungen bei bereits niedrigen Frequenzen besitzen und somit den Betriebskomfort sowie die Betriebsakustik, aber zumindest in allen Fällen die Betriebsfestigkeit und die damit verbundene Systembelastbarkeit der jeweiligen Welle nachhaltig zu beeinträchtigen vermögen.

Typische Beispiele für gegenüber Rotationsschwingungen empfindliche Drehübertragersysteme stellen Antriebsstränge in Kraftfahrzeugen dar, zumal die Leistungsabgabe bei Verbrennungsmotoren durch die einzelnen Zylinder nicht kontinuierlich erfolgt und infolgedessen die Leistungsabgabe des gesamten Motors von Drehmomentschwankungen begleitet wird, die sich insbesondere in jenen Fällen besonders nachteilhaft auswirken, in denen die Frequenz dieser Schwankungen im Bereich oder in der Nähe der Eigenfrequenzen der im Antriebsstrang nachfolgenden drehbeweglichen Systeme, wie beispielsweise Kardanwelle, Getriebe, Lenkungssystem, liegt. In diesen Fällen können die durch den Verbrennungsmotor bedingten Diskontinuitäten zu erhöhten Schwingungsbelastungen, Verschleiß und Geräuschentwicklungen führen, die den Fahrkomfort merklich beeinträchtigen.

Zur Begegnung derartiger Rotationsschwingungen bietet es sich in nahe liegender Weise an, die Torsionssteifigkeit drehbeweglicher Komponenten durch konstruktive Maßnahmen, zumeist durch stabil und möglichst massiv ausgebildete Wellen zu erhöhen, doch führt dies zu einer unerwünschten Gewichtszunahme des Gesamtsystems, die im Hinblick auf den Aspekt von Kosten- und Energieeinsparung als nicht zielführend erscheint. Vielmehr gilt es, nach Lösungen zu suchen, die den Prinzipien des Leichtbaus entsprechen und zudem Schwingungsausbildungen längs sich drehender Wellen der vorstehend beschriebenen Art wirkungsvoll zu vermeiden helfen.

Eine bekannte Möglichkeit ist die Verwendung schwingungsdämpfender Komponenten längs einer die Drehbewegung übertragenden Wellenanordnung. Aus der DE 100 02 259 A1 ist eine Drehmomenten-Übertragungseinrichtung zu entnehmen, insbesondere für den Antriebsstrang eines Kraftfahrzeuges, mit einem scheibenförmigen axial elastischen Bauteil, dessen axiale Elastizität durch Vorsehen geeignet angeordneter Durchtrennungen in Form einer lokalen Bauteilperforation erzeugt wird. Nachteilig ist, dass die Durchtrennungen eine im Wesentlichen unumkehrbare, fest vorgegebene das Bauteil charakterisierende Torsionssteifigkeit zu Folge hat. Somit lassen sich zwar Rotationsschwingungen innerhalb eines fest vorgegebenen Frequenzbereiches bedämpfen, treten jedoch arbeits-, alterungs- oder systembedingte frequenzspezifische Änderungen der sich ausbildenden Eigenfrequenzen der Rotationsschwingungen auf, so stößt die bekannte Drehmomenten-Übertragungseinrichtung an ihre technischen Grenzen.

Demgegenüber ermöglicht die in der EP 2 278 183 A1 beschriebene Welle eine veränderliche Verstellbarkeit ihrer Torsionssteifigkeit. Hierzu ist längs der Welle wenigstens ein Wellenabschnitt, der als so genannter Torsionsstab bezeichnet wird, mit gegenüber dem übrigen Wellenbereich reduziertem Wellenquerschnitt vorgesehen, der über eine geringere Torsionssteifigkeit verfügt als der übrige Wellenbereich. Zudem ist eine längs der Welle axial verschiebbare, rohrförmige Schaltmuffe vorgesehen, die derart ausgebildet und angeordnet ist, dass sie den Bereich des Torsionsstabes überbrückt und somit die angrenzenden Wellenabschnitte direkt miteinander verbindet. Auf diese Weise kann die Torsionssteifigkeit der Welle zumindest zwischen zwei diskreten Steifigkeitswerten durch Verschieben der rohrförmigen Schaltmuffe eingestellt werden.

Die Druckschrift US 5 443 247 A offenbart eine einstellbare RUM-(rotating unbalanced mass)-Vorrichtung, die eine Unwucht enthält, mittels der eine Torsionsschwingung längs einer Welle, deren Torsionssteifigkeit variabel einstellbar ist, initiiert werden kann. Die Wellenanordnung verfügt über ein Torsionselement mit einem kreuzförmigen Querschnitt, dessen erstes Ende axial- und drehfest mit einem ersten Wellenabschnitt verbunden ist. Die wirksame Länge des Torsionselementes, und damit die Torsionssteifigkeit des Torsionselementes, kann stufenlos durch axiales Verschieben eines Zylinders eingestellt werden, indem das zweite Ende des Torsionselements drehfest gelagert ist.

Gleichwohl es möglich ist in Erweiterung der vorstehend beschriebenen stufenweisen Veränderung der Torsionssteifigkeit durch Vorsehen mehrerer, vorstehend bezeichneter Torsionsstäben längs der Welle mit jeweils unterschiedlichen Torsionsstabdurchmessern, die Anzahl der diskret einstellbaren Torsionssteifigkeiten zu erhöhen, besteht dennoch der Wunsch, nach einer möglichst stufenlosen, d.h. kontinuierlichen Veränderbarkeit der um eine Drehachse wirkenden Torsionssteifigkeit einer Wellenanordnung.

Insbesondere im Hinblick auf den Einsatz gewichtsreduzierter Werkstoffe, wie beispielsweise Leichtmetalle, faserverstärkte Verbundwerkstoffe etc. gilt es, nach Lösungen zu suchen, die die Ausbildung rotationsbedingter, störender Schwingungserscheinungen längs sich drehender Wellenanordnungen wirkungsvoll zu unterdrücken vermögen.

### Darstellung der Erfindung

Der Erfindung liegt somit die Aufgabe zugrunde, eine Wellenanordnung zum Weiterleiten von um eine Drehachse wirkenden Drehmomenten mit einer veränderlich einstellbaren, um die Drehachse wirkenden Torsionssteifigkeit derart weiterzubilden, dass die Torsionssteifigkeit der Wellenanordnung um die Drehachse kontinuierlich, d.h. stufenlos, veränderbar ist. Die hierfür zu treffenden Maßnahmen sollen mit technisch einfachen und kostengünstigen Mitteln realisierbar sein und sowohl den Vorgaben des Leichtbaus entsprechen sowie die Möglichkeit einer weitgehend beliebigen Skalierbarkeit eröffnen, so dass Wellenanordnungen mit kontinuierlich einstellbaren Torsionssteifigkeiten sowohl im makro- als auch mikroskopischen Dimensionsbereich realisierbar sind.

Die Lösung der der Erfindung zugrunde liegenden Aufgabe ist im Anspruch 1 angegeben. Die den Erfindungsgedanken in vorteilhafter Weise weiterbildenden Merkmale sind darüber hinaus Gegenstand der Unteransprüche sowie der weiteren Beschreibung unter Bezugnahme auf die Ausführungsbeispiele zu entnehmen.

Eine lösungsgemäße Wellenanordnung zum Weiterleiten von um eine Drehachse wirkenden Drehmomenten mit einer veränderlich stufenlos einstellbaren, um die Drehachse wirkenden Torsionssteifigkeit mit einem ersten Wellenabschnitt längs der Wellenanordnung, an dem dreh- und axialfest wenigstens ein die Drehmomente weiterleitendes Torsionselement gefügt ist, das formstabil quer zur Drehachse ausgebildet und/oder gelagert ist, sowie mit einem zum ersten Wellenabschnitt axial beabstandeten zweiten Wellenabschnitt, an dem das wenigstens eine Torsionselement verdrehsicher und axial beweglich gefügt bzw. mechanisch zwangsgeführt ist, wobei ein mit dem zweiten Wellenabschnitt in Wirkverbindung stehendes oder bringbares Mittel vorgesehen ist, durch das der zweite Wellenabschnitt relativ zum ersten Wellenabschnitt sowie zu dem wenigstens einen Torsionselement axial beweglich auslenkbar ist, zeichnet sich dadurch aus, dass der erste Wellenabschnitt mit einem Antrieb verbunden ist und der zweite Wellenabschnitt als eine gegenüber dem ersten Wellenabschnitt ruhende Trägheit dient. Der erste und zweite Wellenabschnitt sind innerhalb einer Hohlwelle angeordnet, wobei der erste Wellenabschnitt dreh- und axialfest mit der Hohlwelle verbunden und der zweite Wellenabschnitt beabstandet zur Hohlwelle gelagert sind.

Dem lösungsgemäßen Konzept zur stufenlosen Einstellung der Torsionssteifigkeit längs einer Wellenanordnung liegt die strukturelle Gegebenheit zugrunde, dass die Torsionssteifigkeit einer Welle, wie immer sie auch ausgebildet sein mag, von ihrer wirksamen Länge abhängt, längs der die Welle Drehbewegungen und somit Drehmomente zu übertragen vermag. Wird die wirksame Länge der Welle reduziert, so erhöht sich zugleich auch die um die Drehachse der Welle wirkende Torsionssteifigkeit.

Die Wellenanordnung nutzt die vorstehend beschriebene strukturmechanische Gegebenheit in der Weise, dass die wirksame Länge des zwischen dem ersten und zweiten Wellenabschnitt vorgesehenen, wenigstens einen Torsionselementes durch eine kontinuierliche Abstandsvariation zwischen beiden Wellenabschnitten verändert wird. Hierdurch variiert je nach Abstandswahl die um die Drehachse wirkende Torsionssteifigkeit des wenigstens einen Torsionselementes. Wird der Abstand zwischen beiden Wellenabschnitten auf Null reduziert, d.h. beide Wellenabschnitt grenzen axial unmittelbar aneinander, so trägt das wenigstens eine Torsionselement nicht zur Torsionssteifigkeit der Wellenanordnung bei, in diesem Fall ist die Torsionssteifigkeit maximal und nur durch die Wellenabschnitte selbst vorgegeben. Mit zunehmenden axialen Abstand zwischen beiden Wellenabschnitten nimmt die Torsionssteifigkeit der Wellenanordnung ab, da die wirksame Länge des wenigstens einen Torsionselementes und damit verbunden die Tordierbarkeit des wenigstens einen Torsionselementes kontinuierlich zunehmen. Um einen Einfluss auf das Torsionsverhalten der Wellenanordnung nehmen zu können, ist dafür zu sorgen, dass das wenigstens eine Torsionselement längs der Wellenanordnung über eine geringere Torsionssteifigkeit verfügt als der jeweils erste und zweite Wellenabschnitt.

Das wenigstens eine Torsionselement ist vorzugsweise stangen- oder strangförmig ausgebildet, verfügt somit über eine Längserstreckung. Für den Fall, dass zwischen dem ersten und zweiten Wellenabschnitt lediglich ein einziges Torsionselement vorgesehen ist, gilt es, das Torsionselement zentrisch zur Drehachse zwischen beiden Wellenabschnitten anzuordnen, so dass keine rotationsbedingte Unwuchtsmomente durch das Torsionselement selbst hervorgerufen werden. Um andererseits die Axialverschiebbarkeit des zweiten Wellenabschnittes relativ zum Torsionselement und zum anderen die Verdrehsicherheit zwischen dem zweiten Wellenabschnitt und dem Torsionselement sicherzustellen, weist das stab- oder strangförmig ausgebildete Torsionselement zumindest im Bereich, in dem das Torsionselement mit dem zweiten Wellenabschnitt eine Fügung bzw. Lagerung eingeht, einen vom kreisrunden Querschnitt abweichende Querschnittsform auf. Die Fügung des Torsionselementes innerhalb des zweiten Wellenabschnittes erfolgt vorzugsweise formschlüssig, d.h. der zweite Wellenabschnitt weist eine an die Außenkontur des Torsionselementes angepasste Öffnung auf, durch die das Torsionselement axial längs zur Drehachse hindurch geschoben werden kann. Um die axiale Längsverschiebbarkeit des zweiten Wellenabschnittes relativ zum Torsionselement zu gewährleisten, ist die Formschlussverbindung zwischen Torsionselement und zweitem Wellenabschnitt spielbehaftet.

Auch können zwischen dem ersten und zweiten Wellenabschnitt zwei oder mehrere Torsionselemente vorgesehen sein, die jeweils einseitig fest mit dem ersten Wellenabschnitt, d.h. drehfest, sowie auch axialfest gefügt sind und andererseits zwar verdrehsicher, jedoch axial verschiebbar innerhalb des zweiten Wellenabschnittes gelagert sind. Im Falle mehrerer Torsionselemente gilt es, diese in und/oder um die Drehachse der Wellenanordnung derart anzuordnen, dass gleichfalls, wie im vorstehend geschilderten Fall, keine rotationsbedingten Unwuchtsmomente durch die Torsionselemente selbst hervorgerufen werden. Vorzugsweise sind die Torsionselemente daher um die Drehachse gleich verteilt anzuordnen.

Die lösungsgemäße Wellenanordnung stellt einen Rotationsschwingungstilger dar. So dient das wenigstens eine Torsionselement nicht als Funktionsteil zur Übertragung von Drehbewegungen und Drehmomenten längs einer Welle, vielmehr stellt Fall das wenigstens eine Torsionselement die mechanische Verbindung zu einer Trägheit dar, die als Tilgermasse dient und einem rotierenden System beim Auftreten störender Rotationsschwingungen gezielt Schwingungsenergie entzieht. Der erste Wellenabschnitt ist mit einer Schwingungs-zu-bedämpfenden Welle verbunden oder stellt einen Wellenteil der Welle dar. Der zweite Wellenabschnitt der lösungsgemäßen Wellenanordnung ist gegenüber der Schwingungs-zu-bedämpfenden Welle lose zu lagern und ist lediglich über das wenigstens eine Torsionselement mit dem ersten Wellenabschnitt verbunden. Treten längs der Welle Torsionsschwingungen auf, so übertragen sich diese in Abhängigkeit der eingestellten Torsionssteifigkeit längs des wenigstens einen Torsionselementes auf den als Tilgermasse dienenden zweiten Wellenabschnitt, der trägheitsbedingt zeitverzögert in Rotationsschwingungen versetzt wird. Um die längs der rotierenden Welle auftretenden störenden Rotationsschwingungen möglichst effektiv zu beseitigen, gilt es, die Torsionssteifigkeit des wenigstens einen Torsionselementes derart einzustellen, so dass die Tilgermasse in Gegenschwingungen zu den störenden Rotationsschwingungen versetzt wird, wodurch den störenden Rotationsschwingungen Schwingungsenergie entzogen wird. Die den störenden Rotationsschwingungen entzogene Schwingungsenergie wird in Deformationsenergie des sich ständig torsional verformenden, wenigstens einen Torsionselementes investiert.

Durch die stufenlos einstellbare Torsionssteifigkeit der lösungsgemäß ausgebildeten Wellenanordnung können störende Rotationsschwingungen gezielt und effektiv gedämpft werden, die sich in Form von strukturspezifischen, resonanten Eigenfrequenzen ausbilden oder von antriebsseitigen Anregungsfrequenzen herrühren.

In vorteilhafter Weise lässt sich das vorstehend erläuterte Ausführungsbeispiel eines Rotationsschwingungstilgers in Bezug auf das dynamische Schwingungsverhalten des als Tilgermasse dienenden zweiten Wellenabschnittes optional durch folgende ergänzende Maßnahmen erweitern.

Neben der von der wirksamen Länge des wenigstens einen Torsionselementes abhängigen Torsionsteifigkeit lässt sich die Torsionssteifigkeit des Torsionselementes zusätzlich durch die Applikation bzw. Integration eines oder mehrerer Wandlermaterialien längs des oder in das wenigstens eine Torsionselement beeinflussen. Insbesondere kann auf diese Weise Einfluss auf das Dämpfungsverhalten des wenigstens einen Torsionselementes genommen werden. Als Wandlermaterial werden Materialien bezeichnet, die in der Lage sind, Energieformen ineinander überzuführen. Typischerweise werden als Wandlermaterialien Piezokeramik, elektroaktive oder Piezoelektrische-Polymere, elektrostriktive oder magnetostriktive Keramik, Formgedächtnismetall oder Formgedächtnispolymere bezeichnet.

In einem bevorzugten Ausführungsbeispiel bietet es sich an, längs des wenigstens einen Torsionselementes piezokeramisches Material aufzubringen bzw. in dieses zu integrieren. Die an der Piezokeramik geleistete Deformationsarbeit, die bei auftretenden Torsionsschwingungen geleistet wird, wird in elektrische Energie überführt, die beispielsweise für eine weitere Nutzung gezielt abgeleitet werden kann. Auf diese Weise lässt sich somit zusätzlich Schwingungsenergie durch Umwandlung in elektrische Energie dem rotatorisch schwingenden System entziehen. Die elektrische Energie kann in geeigneter Weise genutzt werden.

Eine weitere Möglichkeit besteht in der Verwendung einer elektro- und/oder magnetorheologischen Flüssigkeit, die in oder um den als Tilgermasse dienenden zweiten Wellenabschnitt vorgesehen wird. Je nach Einstellung der Viskosität der elektro- oder magnetorheologischen Flüssigkeit, die durch Applikation eines elektrischen oder magnetischen Feldes veränderbar ist, kann Einfluss auf die Reibung und somit die rotatorische Beweglichkeit des als Tilgermasse dienenden zweiten Wellenabschnittes genommen werden, wodurch letztlich das Dämpfungs- und Schwingungsverhalten des als Tilgermasse dienenden zweiten Wellenabschnittes beeinflusst wird. Weitere Einzelheiten hierzu können der weiteren Beschreibung, die Bezug nimmt auf die in den Figuren dargestellten Ausführungsbeispielen, entnommen werden.

Zur Einstellung der Torsionssteifigkeit der lösungsgemäßen Wellenanordnung bedarf es eines mit dem axial beweglichen zweiten Wellenabschnitt in Wirkverbindung stehenden oder bringbaren Mittels, das je nach dem technischen Anwendungsfall eine längs zur Drehachse orientierte Auslenkung des zweiten Wellenabschnittes bewirkt. Eine derartige Aktorik kann vielfältig ausgebildet sein, beispielsweise in Form eines elektrodynamischen Spindeltriebes, der den zweiten Wellenabschnitt relativ zum ersten Wellenabschnitt bewegt. Ganz allgemein können auch rotatorische Antriebe benutzt werden, die mittels Getriebe eine Rotationsbewegung in eine Linearbewegung umzusetzen vermögen, wodurch die vorstehende Axialbewegung des zweiten Wellenabschnittes initiierbar ist. Gleichsam ermöglichen auch elektrodynamische Linearmotoren bzw. Linearantriebe oder auf Piezotechnik beruhende Längsbeweglichkeiten, beispielsweise in Form eines Inchworm-Motors eine entsprechende Linearverschiebung. Auch ist es denkbar, den zweiten Wellenabschnitt mittels hydraulischer oder pneumatischer Kräfte relativ zum ersten Wellenabschnitt linear beweglich auszulenken. Denkbar wäre auch die Nutzung von Fliehkraft unterstützten Aktoren, bspw. Fliehkraftregler, die den axialen Abstand zwischen beiden Wellenabschnitten in Abhängigkeit von der Wellendrehzahl und der damit verbundenen Zentrifugalkraft zu ändern vermögen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Wellenanordnung mit einem einzigen Torsionselement,
- Fig. 2: Wellenanordnung mit mehreren Torsionselementen,
- Fig. 3: Wellenanordnung in Form eines Rotationsschwingungstilgers,
- Fig. 4: Alternative Beispiele für unterschiedliche Querschnittsgeometrien des wenigstens einen Torsionselementes,
- Fig. 5, 6: Torsionselement mit veränderlichem Querschnitt in Längsrichtung.

### Wege zur Ausführung der Erfindung, gewerbliche Verwendbarkeit

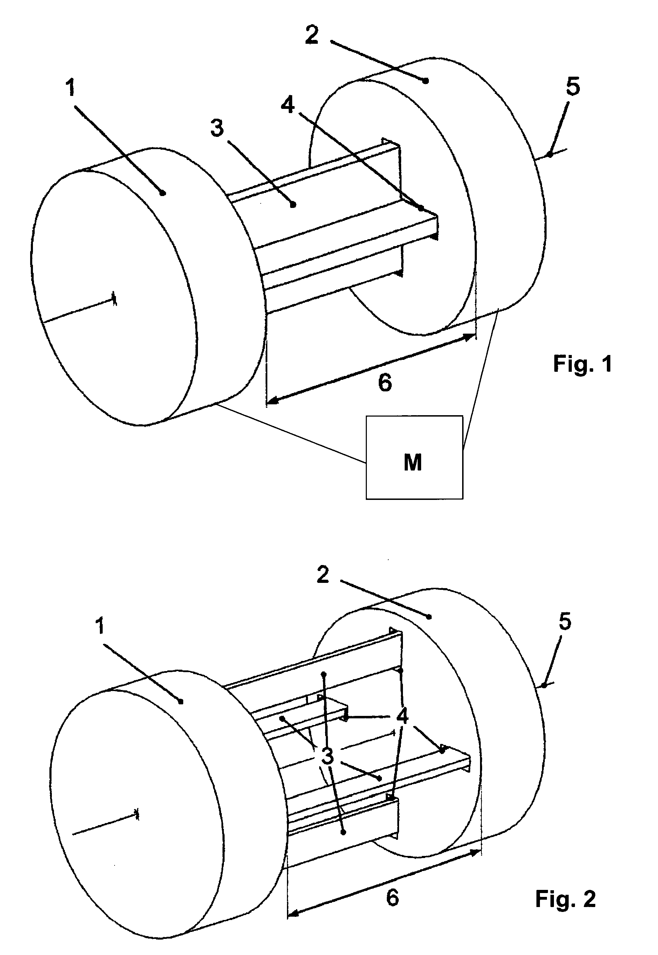

In Fig. 1 ist eine Wellenanordnung, die um eine Drehachse 5 drehbar angeordnet ist, gezeigt, deren um die Drehachse 5 wirkende Torsionssteifigkeit innerhalb bestimmter Grenzen stufenlos eingestellt werden kann. Die Wellenanordnung weist einen ersten Wellenabschnitt 1 sowie einen zweiten Wellenabschnitt 2 auf, die über ein Torsionselement 3 miteinander in Wirkverbindung stehen, wobei die beiden Wellenabschnitte 1, 2 längs der Drehachse 5 verschiebbar zueinander gelagert sind. Hierzu ist das Torsionselement 3, das aus einem im Querschnitt kreuzförmigen Stab- oder Strangprofil besteht, einseitig stirnseitig mit dem ersten Wellenabschnitt 1 fest verbunden, d.h. das Torsionselement 3 ist drehfest und axialfest an dem ersten Wellenabschnitt 1 fest angebracht. Der zweite Wellenabschnitt 2 weist hingegen eine kreuzförmige Öffnung 4 auf, durch die passgenau das ebenfalls im Querschnitt kreuzförmig ausgebildete Torsionselement 3 längs zur Drehachse 5 axial verschieblich hindurchführbar ist. Durch die von der Kreisform abweichende Querschnittskontur des Torsionselementes 3, hier kreuzförmig, ist das Torsionselement 3 gegenüber dem zweiten Wellenabschnitt 2 verdrehsicher gefügt, gleichwohl der zweite Wellenabschnitt 2 axialbeweglich längs zur Drehachse 5 in Längserstreckung zum Torsionselement 3 verschoben werden kann. Durch die axiale Verschiebung des zweiten Wellenabschnittes 2 längs zum Torsionselement 3 ändert sich bei Rotation der Wellenanordnung um die Drehachse 5 die Krafteinleitung an dem Torsionselement 3 mit dem Resultat, dass sich die von der wirksamen freien Länge 6 des Torsionselementes 3 abhängende Torsionssteifigkeit des Torsionselementes 3 und somit der gesamten Wellenanordnung entsprechend ändert. Grundsätzlich nimmt die Torsionssteifigkeit mit abnehmender freier axialer Länge 6 des Torsionselementes 3 zu, d.h. befinden sich beide Wellenabschnitte 1, 2 in einem sehr großen Abstand zueinander, so ist die Torsionssteifigkeit der Wellenanordnung klein gegenüber einer Konstellation mit einem geringen Abstand zwischen beiden Wellenabschnitten 1, 2. Grenzen beide Wellenabschnitte 1, 2 abstandslos axial aneinander an, so trägt das Torsionselement 3 nichts zur Torsionssteifigkeit der Wellenanordnung bei.

Das in Fig. 1 illustrierte Ausführungsbeispiel weist lediglich ein einziges Torsionselement 3 auf, das zentrisch zur Drehachse 5 zwischen beiden Wellenabschnitten 1, 2 angebracht ist. Zur Längsverschiebung des zweiten Wellenabschnittes 2 relativ zum ersten Wellenabschnitt 1 gilt es, den zweiten Wellenabschnitt kontrolliert zu verschieben. Dies erfolgt mit Hilfe eines Verstellmittels M, dessen Wechselwirkung mit dem zweiten Wellenabschnitt 2 in Fig. 1 lediglich schematisiert dargestellt ist. Das Verstellmittel M kann in Form eines Aktors ausgebildet sein, beispielsweise in Form eines zwischen beiden Wellenabschnitten 1, 2 angebrachten Spindeltrieb oder ähnlich axial wirkende Mechanismen.

Fig. 2 zeigt eine Wellenanordnung mit jeweils vier separaten, zwischen dem ersten und zweiten Wellenabschnitt 1, 2 angebrachten Torsionselementen 3, die vergleichbar zum Ausführungsbeispiel gemäß Fig. 1 einseitig stirnseitig dreh- und axialfest mit dem ersten Wellenabschnitt 1 fest angebracht sind, wohingegen der zweite Wellenabschnitt 2 geeignet ausgebildete Öffnungen 4 vorsieht, durch die die einzelnen Torsionselemente 3 formschlüssig hindurchragen, so dass die Torsionselemente 3 drehsicher, jedoch axialbeweglich relativ zum zweiten Wellenabschnitt 2 gelagert sind. Im Falle von zwei oder mehr Torsionselementen, hier vier Torsionselemente , die symmetrisch zur Drehachse 5 angeordnet sind, so dass bei Rotation der Wellenanordnung um die Drehachse 5 keine Unwuchtsmomente entstehen können, stehen grundsätzlich alle denkbaren Querschnittsformen zur Realisierung der Torsionselemente zur Verfügung, so auch eine kreisrunde Querschnittsform. Durch die außerhalb der Drehachse 5 angebrachte Anordnung der vier Torsionselemente 3 ist es beispielsweise möglich, längs der Drehachse 5 einen axial wirkenden Aktor (nicht dargestellt) vorzusehen, durch den die axiale Lageverschiebung des zweiten Wellenabschnittes 2 relativ zum ersten Wellenabschnitt 1 vorgenommen werden kann. Neben der bereits erwähnten Ausgestaltungsform eines derartigen Aktors als elektromechanischer Spindeltrieb können auch alternative elektrodynamische Linearantriebe sowie die Verwendung von Piezoantrieben eingesetzt werden.

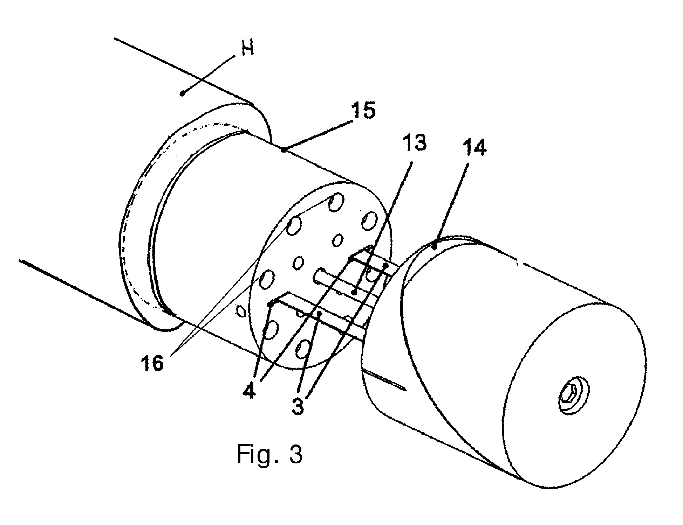

In Fig. 3 ist eine als Rotationsschwingungstilger lösungsgemäß ausgebildete Wellenanordnung illustriert, die auf dem gleichen Wirkprinzip basiert, wie die in Fig. 1 und 2 erläuterten Wellenanordnungen. So sei angenommen, dass der in Fig. 3 dargestellte Rotationsschwingungstilger innerhalb einer Drehbewegungen und Drehmomente übertragenden Hohlwelle H, die aus Gründen für eine übersichtlichere Darstellung in Fig. 3 nur teilweise gezeigt ist, montiert ist. Hierzu weist der Rotationsschwingungstilger ein innerhalb der nicht weiter dargestellten Hohlwelle axial- sowie auch drehfest montierbares Bauteil 14 auf, das einen Keilverbund darstellt, der innerhalb der Hohlwelle gegen Verdrehen sowie axiales Verschieben platziert und fixiert werden kann. Der Keilverbund 14 stellt im Vergleich zu den in den Fig. 1 und 2 illustrierten Ausführungsbeispielen den ersten Wellenabschnitt dar. Einseitig stirnseitig an das Bauteil 14 sind axial- und drehfest zwei Torsionselemente 3 fest gefügt, längs der eine Trägheit oder Tilgermasse 15 axial beweglich geführt ist, gleichsam dem vorstehend erläuterten zweiten Wellenabschnitt 2. Zur axial orientierten Längsverschiebung der Trägheit 15 relativ zu den Torsionselementen 3 ist zudem ein Aktor 13 vorgesehen, der die Trägheit 15 mit dem Keilverbund 14 verbindet. Wird die Trägheit 15 vermittels des Aktors 13 längs der Drehachse 5 verschoben, so ändert sich entsprechend die wirksame Länge 6 der Torsionselemente 3 und damit verbunden die Torsionssteifigkeit. Durch die Veränderung der Torsionssteifigkeit ändert sich zugleich die Eigenfrequenz des Rotationstilgers, so dass auf diese Weise die Tilgerfrequenz individuell angepasst und während des Betriebes variiert werden kann.

Im Falle des innerhalb einer Hohlwelle angeordneten Rotationsschwingungstilgers ist die Trägheit 15 lose innerhalb der Hohlwelle gelagert und lediglich über die Torsionselemente 3 sowie dem zur Axialverschiebung vorgesehenen Aktor 13 über den Keilverbund 14 mit der Hohlwelle verbunden. Die mit den störenden Rotationsschwingungen auftretende Schwingungsamplitude der Hohlwelle kann somit durch resonantes Anregen des Rotationsschwingungstilgers reduziert werden, wodurch die störenden Rotationsschwingungen längs der Welle wirksam gedämpft werden. Ändert sich die Frequenz der als störend auftretenden Rotationsschwingungen längs der Hohlwelle, beispielsweise durch Änderung von Leistungsbereichen oder durch Ankopplung von anderen mechanischen Systemen an die Welle, so kann die Tilgerfrequenz durch Änderung der Torsionssteifigkeit mittels einer kontrollierten Abstandsänderung von Trägheit 15 zum Keilverbund 14 nachgeführt werden.

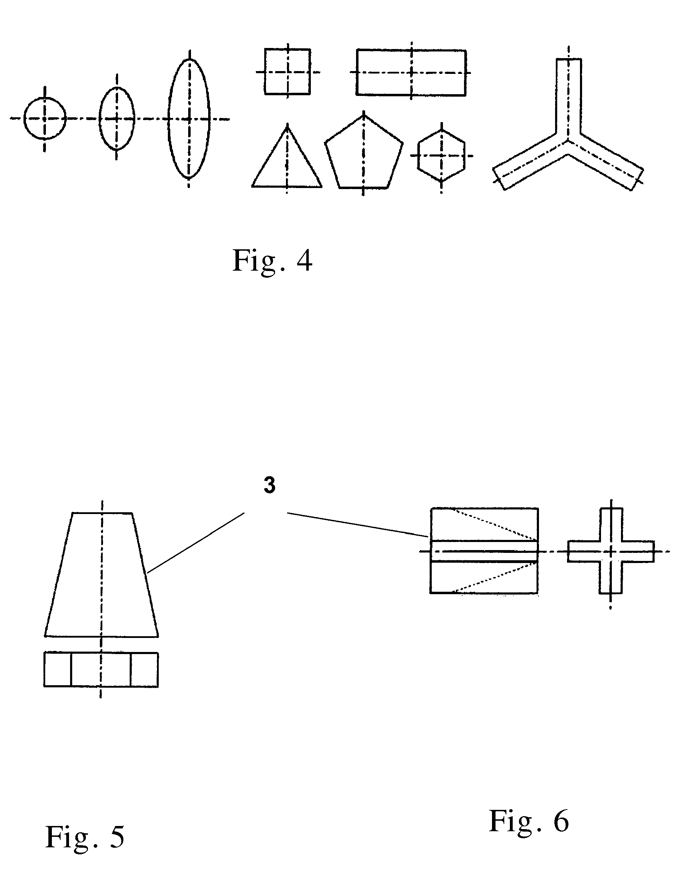

Selbstverständlich ist es möglich, die in Fig. 3 dargestellten Torsionselemente 3 mit von der Rechtecksform abweichenden Querschnitten auszuführen, beispielsweise mit Querschnitten, wie sie in Fig. 4 in nicht abschließender Weise dargestellt sind. Entsprechendes gilt auch für die Torsionselemente in den Figuren 1 und 2.

Aufgrund der Anbringung von zwei Torsionselementen 3 außerhalb der Drehachse 5, wie dies beispielsweise aus Fig. 3 zu entnehmen ist, ist es möglich, die Torsionselemente 3 auch mit einem kreisrunden Querschnitt auszubilden. Dies ist jedoch nicht möglich bei der Verwendung lediglich eines einzigen Torsionselementes, das zentrisch zur Drehachse 5, gleichsam dem Ausführungsbeispiel in Fig. 1, angebracht ist, zumal in diesem Fall eine drehfeste Anbringung des Torsionselementes an der jeweils zweiten Wellenanordnung nicht möglich wäre.

Auch besteht die Möglichkeit, das wenigstens eine Torsionselement mit einem veränderlichen Querschnitt in Längserstreckung auszubilden, wie dies beispielsweise aus den Ausführungsbeispielen gemäß der Figuren 5 und 6 zu entnehmen ist. So zeigt Fig. 5 ein Torsionselement 3 in Form einer in Längserstreckung konisch zulaufenden Hülse, wohingegen Fig. 6 ein im Querschnitt kreuzförmig ausgebildetes Torsionselement 3 illustriert, mit einem einseitig stirnseitig verjüngend zulaufenden Querschnitt.

Bezug nehmend auf den in Fig. 3 illustrierten Rotationsschwingungstilger sei eine im Weiteren ergänzende Maßnahme zur Beeinflussung des Schwingungsverhaltens der Trägheit 15 erläutert.

Da der Rotationsschwingungstilger, wie bereits erläutert, innerhalb einer nicht dargestellten Hohlwelle angeordnet ist, umfasst das Innere der Hohlwelle ein Volumen, in dem sowohl die Torsionselemente 3 als auch die Trägheit 15 beabstandet zur Innenwand der Hohlwelle angeordnet sind. Wird dieses Volumen oder zumindest ein Teil dieses Volumens mit einem Fluid befüllt, so übt das Fluid eine dämpfende Wirkung auf das Schwingungsverhalten der Trägheit 15 aus. Wird vorzugsweise als Fluid eine elektro- oder magnetorheologische Flüssigkeit eingesetzt, deren Viskosität durch entsprechende elektrische oder magnetische Einflussnahme veränderbar ist, so kann über die Viskositätseinstellung des Fluids das Schwingungsverhalten der Trägheit 15 und damit verbunden die Dämpfungswirkung aktiv beeinflusst werden. Zur Erhöhung der Wechselwirkung zwischen dem Fluid und der Trägheit 15 bietet es sich ferner an, die Trägheit 15 mit axial längs zur Drehachse orientierten Durchgangskanälen 16 zu versehen, so dass zumindest Anteile des Fluids die Trägheit 15 durchströmen. Durch Viskositätsänderung eines entsprechend gewählten Fluids lässt sich auf diese Weise eine erhöhte Einflussnahme auf die Rotationsbeweglichkeit der Trägheit 15 innerhalb des Fluids erzielen. Auch ist es denkbar, die innerhalb der Trägheit 15 eingebrachten Durchgangskanäle 16 mit geeigneten Verschlussmitteln zu verschließen, um auch auf diese Weise eine weitere Einflussnahme auf das Dämpfungsverhalten der Trägheit nehmen zu können.

Eine weitere Maßnahme zur Einflussnahme auf die Dämpfung des Tilgersystems besteht in der Applikation bzw. Integration piezokeramischer Elemente auf bzw. in den Torsionselementen 3. Einerseits vermögen die piezokeramischen Werkstoffe bei Deformation elektrische Spannung zu generieren, die durch entsprechende Ableitung einer technischen Nutzung zugeführt werden kann, andererseits können derartige Piezokeramiken durch geeignete elektrische Ansteuerung eine auf die Torsionselemente zusätzlich versteifende Wirkung erzielen, wodurch eine zusätzliche Einflussnahme auf die Torsionssteifigkeit der Torsionselemente und die damit verbundene Dynamik zur Veränderlichkeit der Torsionssteifigkeit genommen werden kann.

Eine weitere Möglichkeit Einfluss auf die Dämpfungswirkung des Tilgersystems nehmen zu können, besteht im Vorsehen einer Durchlassöffnung entlang jedes einzelnen Torsionselementes. Da die Torsionselemente 3 gleichsam der Trägheit 15 ebenfalls von dem Fluid innerhalb der Hohlwelle umgeben sind, vermag das Fluid durch die Durchlassöffnung längs der Torsionselemente hindurch treten, wodurch die Wechselwirkung zwischen dem Fluid und den Torsionselementen verbessert wird.

Hinzu kommt, dass bei einer axialen Verschiebung der Trägheit 15 mittels des Aktors 13 längs der Torsionselemente 3 die dort vorgesehenen Durchlassöffnungen in Abhängigkeit der axialen Position der Trägheit 15 abgedeckt werden. Die Durchlassöffnungen können dabei derart gestaltet sein, dass die Dämpfung mit der Veränderung der Torsionssteifigkeit angepasst wird. Zusätzlich ist es denkbar, die Durchlassöffnungen innerhalb der Torsionselemente, beispielsweise mit geeignet ausgebildeten Schiebern, in ihrer Form und Größe zu verändern oder vollständig zu verschließen.

All die vorstehend genannten Maßnahmen tragen dazu bei, die Dämpfung des Rotationsschwingungstilgers individuell zu beeinflussen.

Eine weitere Möglichkeit zur Dämpfung des in Fig. 3 dargestellten Rotationsschwingungstilgers sieht das elektrodynamische Wandlerprinzip vor. Sind beispielsweise die Trägheit 15 aus einem permanentmagnetischen Material und die nicht in Fig. 3 dargestellte Hohlwelle aus einem elektrisch leitenden Material gefertigt, so wird durch die Relativbewegung zwischen der Trägheit 15 und der Hohlwelle innerhalb der Hohlwelle, die als Spule aufgefasst werden kann, eine Spannung induziert. Diese elektrische Spannung kann entweder zum Betrieb eines technischen Verbrauchers genutzt werden, im Sinne einer elektrischen Energiegewinnung (Energy Harvesting) oder mittels eines geeignet gewählten elektrischen Widerstandes in Ohm'sche Wärme umgewandelt werden. Durch die Verwendung eines stufenlos einstellbaren Ohm'schen Widerstandes kann auf diese Weise das Dämpfungsmaß gleichsam stufenlos verändert werden.

Die vorstehend beschriebene lösungsgemäß ausgebildete Wellenanordnung lässt sich integrativ in eine Drehbewegungen sowie auch Drehmomente weiterleitende Welle mit stufenlos einstellbarer Torsionssteifigkeit integrieren, die beispielsweise in Verbrennungskraftmaschinen, Kompressoren, Pumpen, Werkzeugmaschinen und ähnliche Rotationsbewegungen ausführende Systeme zur Vermeidung oder Verringerung von Rotationsschwingungsresonanzen enthalten sind.

Die lösungsgemäße Wellenanordnung lässt sich als Torsionsschwingungstilger oder -neutralisator einsetzen, bei dem die Wirkfrequenz des Tilgers/Neutralisators durch die Verstellung der Torsionssteifigkeit stufenlos angepasst werden kann. Dies ermöglicht eine Anpassung an veränderliche Resonanzfrequenzen im Falle eines Tilgers oder an veränderliche Anregungsfrequenzen im Falle eines Neutralisators.

### Bezugszeichenliste

- 1: Erster Wellenabschnitt
- 2: Zweiter Wellenabschnitt
- 3: Torsionselement
- 4: Öffnung
- 5: Drehachse
- 6: Wirksame axiale Länge des Torsionselementes, Abstand zwischen beiden Wellenabschnitten
- 13: Aktor
- 14: Keilverbund
- 15: Trägheit
- 16: Durchgangskanal
- M: Mittel
- H: Hohlwelle

## Patentansprüche

1. Wellenanordnung zum Weiterleiten von um eine Drehachse (5) wirkenden Drehmomenten mit einer veränderlich einstellbaren, um die Drehachse (5) wirkenden Torsionssteifigkeit, mit einem ersten Wellenabschnitt (1), an dem dreh- und axialfest wenigstens ein die Drehmomente weiterleitendes Torsionselement (3) gefügt ist, das formstabil quer zur Drehachse (5) ausgebildet und/oder gelagert ist, einem zum ersten Wellenabschnitt (1) axial beabstandeten, zweiten Wellenabschnitt (2), an dem das wenigstens eine Torsionselement (3) verdrehsicher und axialbeweglich gefügt ist, und einem mit dem zweiten Wellenabschnitt (2) in Wirkverbindung stehenden oder bringbaren Mittel (M), durch das der zweite Wellenabschnitt (2) relativ zum ersten Wellenabschnitt (1) sowie dem wenigstens einen Torsionselement (3) axialbewegbar ist,
**dadurch gekennzeichnet, dass** der erste Wellenabschnitt (1) mit einem Antrieb verbunden ist und der zweite Wellenabschnitt (2) als eine gegenüber dem ersten Wellenabschnitt (1) ruhende Trägheit dient,
dass der erste und zweite Wellenabschnitt (1, 2) innerhalb einer Hohlwelle angeordnet sind, und
dass der erste Wellenabschnitt (1) dreh- und axialfest mit der Hohlwelle verbunden und der zweite Wellenabschnitt (2) beabstandet zur Hohlwelle gelagert ist.

2. Wellenanordnung nach Anspruch 1,
**dadurch gekennzeichnet, dass** der zweite Wellenabschnitt (2) zur verdrehsicheren und axialbeweglichen Fügung des wenigstens einen Torsionselements (3) eine axial orientierte Öffnung (4) mit einem an die Querschnittsform des wenigstens einen Torsionselementes (3) angepassten Öffnungsquerschnitt besitzt.

3. Wellenanordnung nach Anspruch 2,
**dadurch gekennzeichnet, dass** ein einziges Torsionselement (3) vorgesehen ist, das über eine von der Kreisform abweichende Querschnittsform verfügt, und dass die axial orientierte Öffnung (4) zentrisch zur Drehachse (3) angeordnet ist.

4. Wellenanordnung nach Anspruch 2,
**dadurch gekennzeichnet, dass** mehr als ein Torsionselement (3) vorgesehen ist, und dass wenigstens zwei Torsionselemente gleich verteilt um die Drehachse (5) angeordnet sind.

5. Wellenanordnung nach einem der Ansprüche 1 bis 4,
**dadurch gekennzeichnet, dass** die um die Drehachse (5) wirkende Torsionssteifigkeit durch eine freie axiale Erstreckung des wenigstens einen Torsionselementes (3) zwischen beiden Wellenabschnitten (1, 2) vorgebbar ist und die freie axiale Erstreckung des wenigstens einen Torsionselementes (3) kontinuierlich durch Änderung des axialen Abstandes zwischen beiden Wellenabschnitten (1, 2) mit Hilfe des Mittels (M) veränderbar ist.

6. Wellenanordnung nach einem der Ansprüche 1 bis 5,
**dadurch gekennzeichnet, dass** Wandlermaterial an das wenigstens eine Torsionselement appliziert oder in das wenigstens eine Torsionselement integriert ist.

7. Wellenanordnung nach Anspruch 6,
**dadurch gekennzeichnet, dass** das Wandlermaterial aus wenigstens einer der nachfolgenden Werkstoffklassen gewählt ist: Piezokeramik, elektroaktives oder Piezoelektrisches-Polymer, elektrostriktive oder magnetostriktive Keramik, Formgedächtnismetall, Formgedächtnispolymer.

8. Wellenanordnung nach einem der Ansprüche 1 bis 7,
**dadurch gekennzeichnet, dass** die Hohlwelle zumindest im Bereich des wenigstens einen Torsionselementes (3) mit einem elektrorheologischen Fluid, Polymergel, magnetorheologischen Fluid oder magnetorheologischen oder elektrorheologischen Polymer zumindest teilweise gefüllt ist.

9. Wellenanordnung nach einem der Ansprüche 1 bis 8,
**dadurch gekennzeichnet, dass** das mit dem zweiten Wellenabschnitt (2) in Wirkverbindung stehende oder bringbare Mittel (M) auf einem der nachfolgenden Mechanismen beruht: motorischer Spindelantrieb, motorischer Linearantrieb, hydraulischer oder pneumatischer Antrieb, Piezoantrieb.

10. Verwendung der Wellenanordnung nach einem der Ansprüche 1 bis 9 als Tilger oder Neutralisator zur Unterdrückung von längs der Wellenanordnung auftretenden resonanten Rotationsschwingungen.

## Claims

1. A shaft arrangement for transferring torques acting about a rotation axis (5), having a variably adjustable torsional rigidity acting about the rotation axis (5), comprising a first shaft section (1) on which at least one torsion element (3) is fitted in a torsionally and axially fixed manner, which torsion element transfers the torques and is formed and/or mounted so as to be dimensionally stable transverse to the rotation axis (5), a second shaft section (2) which is axially spaced apart from the first shaft section (1) and on which the at least one torsion element (3) is fitted in a rotationally fixed and axially movable manner, and a means (M) which is or can be brought into an operative connection with the second shaft section (2) and by means of which the second shaft section (2) can be axially moved relative to the first shaft section (1) and to the at least one torsion element (3),
**characterized in that** the first shaft section (1) is connected to a drive and the second shaft section (2) serves as an inertia that is stationary with respect to the first shaft section (1),
that the first and second shaft sections (1, 2) are arranged within a hollow shaft, and
that first shaft section (1) is connected to the hollow shaft in a torsionally and axially fixed manner and the second shaft section (2) is mounted spaced apart from the hollow shaft.

2. The shaft arrangement according to claim 1,
**characterized in that** for fitting the at least one torsion element (3) in a rotationally fixed and axially movable manner, the second shaft section (2) has an axially oriented opening (4) having an opening cross-section adapted to the cross-sectional shape of the at least one torsion element (3).

3. The shaft arrangement according to claim 2,
**characterized in that** a single torsion element (3) is provided that has a cross-sectional shape differing from the circular shape, and that the axially oriented opening (4) is arranged centrically to the rotation axis (3).

4. The shaft arrangement according to claim 2,
**characterized in that** more than one torsion element (3) is provided, and that at least two torsion elements are arranged equally distributed about the rotation axis (5).

5. The shaft arrangement according to any one of claims 1 to 4,
**characterized in that** the torsional rigidity acting about the rotation axis (5) can be predefined by free axial extent of the at least one torsion element (3) between the two shaft sections (1, 2), and the free axial extent of the at least one torsion element (3) can be changed continuously by changing the axial spacing between the two shaft sections (1, 2) by means of the means (M).

6. The shaft arrangement according to any one of claims 1 to 5,
**characterized in that** transducer material is applied on the at least one torsion element or is integrated in the at least one torsion element.

7. The shaft arrangement according to claim 6,
**characterized in that** the transducer material is selected from at least one of the following material classes: piezo ceramics, electroactive or piezoelectric polymer, electrostrictive or magnetostrictive ceramics, shape memory metal, shape memory polymer.

8. The shaft arrangement according to any one of claims 1 to 7,
**characterized in that** the hollow shaft is at least partially filled at least in the region of the torsion element (3) with an electrorheological fluid, polymer gel, magnetorheological fluid or magnetorheological or electrorheological polymer.

9. The shaft arrangement according to any one of claims 1 to 8,
**characterized in that** the means (M) that is or can be brought into operative connection with the second shaft section (2) is based on one of the following mechanisms: motor spindle drive, motor linear drive, hydraulic or pneumatic drive, piezo drive.

10. Use of the shaft arrangement according to any one of claims 1 to 9 as an absorber or neutralizer for suppressing resonant rotational vibrations occurring along the shaft arrangement.

## Revendications

1. Système d'arbre de transmission de couples de rotation agissant autour d'un axe de rotation (5) avec une rigidité à la torsion variablement réglable, agissant autour de l'axe de rotation (5), avec une première section d'arbre (1), à laquelle est ajouté solidaire en rotation et fixe en axe au moins un élément de torsion (3) transmettant les couples, qui est constitué et/ou logé de façon indéformable transversalement à l'axe de rotation (5), avec une deuxième section d'arbre (2) axialement distante de la première section d'arbre (1) à laquelle est ajouté de manière à ne pas pouvoir tourner et axialement mobile au moins un élément de torsion (3) et avec un moyen (M) étant ou pouvant être mis en liaison fonctionnelle avec la deuxième section d'arbre (2) par le biais duquel la deuxième section d'arbre (2) peut être axialement mobile par rapport à la première section d'arbre (1) ainsi qu'au moins un élément de torsion (3),
**caractérisé en ce que**
la première section d'arbre (1) est reliée a un entraînement et la deuxième section d'arbre (2) sert d'une inertie statique vis-à-vis de la première section d'arbre (1),
**en ce que** la première et deuxième section d'arbre (1, 2) sont disposées à l'intérieur d'un arbre creux, et
**en ce que** la première section d'arbre (1) est reliée solidaire en rotation et en axe à l'arbre creux et la deuxième section d'arbre (2) est logée à distance de l'arbre creux.

2. Système d'arbre selon la revendication 1 **caractérisé en ce que** la deuxième section d'arbre (2) possède, pour adjonction de manière rigide à la torsion et de façon axialement mobile d'au moins un élément de torsion (3), une ouverture (4) orientée dans l'axe avec une section d'ouverture adaptée à la forme de section d'au moins un élément de torsion (3).

3. Système d'arbre selon la revendication 2 **caractérisé en ce qu'**un élément de torsion (3) unique est prévu qui dispose d'une forme de section s'écartant de la forme circulaire et **en ce que** l'ouverture orientée dans l'axe (4) est disposée de façon centrée par rapport à l'axe de rotation (3).

4. Système d'arbre selon la revendication 2 **caractérisé en ce que** plus d'un élément de torsion (3) est prévu et **en ce qu'**au moins deux éléments de torsion sont disposés uniformément répartis autour de l'axe de rotation (5).

5. Système d'arbre selon l'une quelconque des revendications 1 à 4 **caractérisé en ce que** la rigidité à la torsion agissant autour de l'axe de rotation (5) peut être préalablement fixée par une extension libre axiale d'au moins un élément de torsion (3) entre les deux sections d'arbre (1, 2) et l'extension libre axiale d'au moins un élément de torsion (3) peut être modifiée en continu en changeant la distance axiale entre les deux sections d'arbre (1, 2) à l'aide du moyen (M).

6. Système d'arbre selon l'une quelconque des revendications 1 à 5 **caractérisé en ce que** le matériau de convertisseur est appliqué au moins à un élément de torsion ou est intégré dans au moins un élément de torsion.

7. Système d'arbre selon la revendication 6 **caractérisé en ce que** le matériau de convertisseur est sélectionné à partir d'au moins une des catégories de matières suivantes : piézocéramique, polymère électroactif ou piézoélectrique, céramique électrostrictive ou magnétostrictive, métal à mémorisation de forme, polymère à mémorisation de forme.

8. Système d'arbre selon l'une quelconque des revendications 1 à 7 **caractérisé en ce que** l'arbre creux est rempli au moins partiellement au moins au niveau d'au moins un élément de torsion (3) d'un fluide électrorhéologique, de gel de polymère, de fluide magnétorhéologique ou de polymère magnétorhéologique ou électrorhéologique.

9. Système d'arbre selon l'une quelconque des revendications 1 à 8 **caractérisé en ce que** le moyen (M) étant ou pouvant être mis en liaison fonctionnelle avec la deuxième section d'arbre (2) repose sur un des mécanismes suivants : entraînement à broche motorisé, entraînement linéaire motorisé, entraînement hydraulique ou pneumatique, piézo-entraînement.

10. Utilisation du système d'arbre selon l'une quelconque des revendications 1 à 9 en tant qu'amortisseur ou neutralisateur destiné à supprimer les vibrations de rotation résonantes se produisant le long du système d'arbre.
